# FASCICULE DE BREVET EUROPEEN

(11) **EP 0 555 113 B1**
(45) Date de publication et mention de la délivrance du brevet: **27.11.1996**
(21) Numéro de dépôt: 93400126.4
(22) Date de dépôt: 20.01.1993
(51) Int. Cl.: A01B 3/421, A01B 3/46

(54) **Charrue réversible semi-portée**
Aufsatteldrehpflug
Semi-mounted reversible plough

(30) Priorité: 05.02.1992 FR 9201269
(43) Date de publication de la demande: 11.08.1993
(73) Titulaire: HUARD S.A., F-44142 Chateaubriant Cédex (FR)
(72) Inventeur: Perret, Louis, F-44110 Chateaubriant (FR); Gentilhomme, Guy, F-44110 Chateaubriant (FR)
(74) Mandataire: Loyer, Bertrand

(56) Documents cités:
- EP-A- 0 044 876
- FR-A- 1 516 400
- FR-A- 2 229 337
- FR-A- 2 304 801
- FR-A- 2 513 479
- FR-A- 2 627 932
- US-A- 3 583 493
- US-A- 3 744 573
- OLEODINAMICA E PNEUMATICA vol. 19, no. 9, 1 Septembre 1978, MILANO page 87 'VALVOLE DI RITENUTA BLOCCABILI AUTOMATICAMENTE'

## Description

L'invention se rapporte à une charrue réversible semi-portée comportant :
- une poutre,
- un bâti portant des corps de labour et monté pivotant autour d'au moins un pivot avant de ladite poutre de sorte à pouvoir occuper deux positions de travail, une console étant solidaire dudit bâti
   et
- un dispositif de retournement comportant deux leviers mobiles guidés en rotation sur ladite poutre autour de l'axe dudit pivot avant et deux vérins articulés chacun d'une part sur la console et d'autre part à l'un correspondant des deux leviers mobiles, de telle sorte que dans chaque position de travail, le levier mobile lié au vérin se trouvant en position raccourcie soit en butée contre la poutre.

De telles charrues sont décrites dans les documents FR 2 575 358-B1 et FR 2 627 932-A1.

Le document FR 2 575 358-B1 décrit en effet une charrue réversible semiportée qui comporte un avant-train destiné à être attelé à l'attelage trois points d'un tracteur, une poutre disposée entre ledit avant-train et un support d'une roue, et un bâti portant des corps de labour.

Ledit bâti est monté à rotation autour d'un pivot avant et d'un pivot arrière de la poutre et peut ainsi occuper deux positions de travail. Le pivotement du bâti autour des pivots avant et arrière est assuré par un dispositif de retournement comportant deux vérins et deux leviers mobiles. Les deux leviers mobiles sont guidés en rotation sur la poutre autour de l'axe du pivot avant, tandis que les deux vérins sont implantés entre ces leviers mobiles et le bâti. Plus précisément, chaque vérin est articulé, à l'extrémité de son cylindre, à une console du bâti et, à l'extrémité de sa tige, au levier mobile correspondant.

Dans une première position de travail, c'est le premier vérin qui est en position raccourcie et l'extrémité de sa tige est en contact avec une première butée solidaire de la poutre. En fait, ceci veut également dire que le levier mobile correspondant (premier levier mobile) est indirectement en contact avec la poutre. Le deuxième vérin par contre se trouve en position allongée et le levier mobile correspondant (deuxième levier mobile) n'est pas en butée sur la poutre.

Dans la deuxième position de travail, c'est le deuxième vérin qui est en position raccourcie avec l'extrémité de sa tige en contact avec un deuxième butée solidaire de la poutre (c'est-à-dire que le deuxième levier mobile est indirectement en contact avec la poutre. Le premier vérin, quant à lui, se trouve en position allongée et le premier levier mobile n'est pas en butée sur la poutre.

Pour passer de la première à la deuxième position de travail, on commande le premier vérin en allongement. Celui-ci atteint son allongement maximal lorsque le bâti a passé le plan vertical passant par l'axe des pivots. La poursuite du mouvement vers la deuxième position de travail s'effectue alors sous l'action du poids du bâti et des corps de labour. Ce faisant, le deuxième vérin se raccourcit.

Dans chaque position de travail, le contact entre l'extrémité de la tige du vérin qui se trouve en position raccourcie, et la butée correspondante (c'est-à-dire le contact indirect entre le levier mobile correspondant et la poutre) est assuré par le seul poids du bâti et des corps de labour qu'il porte.

Le document FR 2 627 932-A1 décrit également une charrue réversible semiportée qui comporte un avant-train destiné à être attelé à l'attelage à trois points d'un tracteur, une poutre disposée entre cet avant-train et un support d'une roue, et un bâti portant des corps de labour.

Le bâti est monté à rotation autour d'un pivot avant de la poutre et d'un pivot arrière du support de la roue, et peut ainsi occuper deux positions de travail. Le pivotement du bâti autour des pivots avant et arrière est assuré par un dispositif de retournement comportant deux vérins et deux leviers mobiles. Les deux leviers mobiles sont guidés en rotation sur la poutre autour de l'axe du pivot avant, tandis que les deux vérins sont implantés entre ces leviers mobiles et le bâti. Plus précisément, chaque vérin est articulé, à l'extrémité de son cylindre, à une console du bâti et, à l'extrémité de sa tige, au levier mobile correspondant.

Dans une première position de travail, c'est le premier vérin qui est en position raccourcie et le levier mobile correspondant (premier levier mobile) est en butée sur un support fixe solidaire du bâti. Le deuxième vérin par contre se trouve en position allongée et le levier mobile correspondant (deuxième levier mobile) n'est pas en butée sur le support fixe.

Dans la deuxième position de travail, c'est le deuxième vérin qui est en position raccourcie avec le deuxième levier mobile en butée sur le support fixe. Le premier vérin, quant à lui, se trouve alors en position allongée et le premier levier mobile n'est pas en butée sur le support fixe.

Dans chaque position de travail, le contact entre le levier mobile correspondant et le support fixe est là-aussi assuré par le seul poids du bâti et des corps de labour qu'il porte.

Mais, la pratique a montré que, dans certaines conditions de travail, le maintien en position du bâti et des corps de labour qu'il porte, est mal assuré. En effet, les réactions exercées par le sol sur les corps de labour qui sont opérationnels, peuvent être telles que l'ensemble bâti-corps de labour pivote vers le haut autour des pivots. La bonne position des corps de labour qui sont opérationnels n'est alors plus assurée, ce qui conduit à un labour de mauvaise qualité.

Le document FR 2 526 262 décrit une charrue réversible semi-portée qui comporte un avant-train destiné à être attelé à l'attelage d'un tracteur, une poutre disposée entre ledit avant-train et un support d'une roue, et un bâti portant des corps de labour.

Ledit bâti est monté à rotation sur la poutre grâce à un manchon avant et un manchon arrière solidaires du bâti et guidés en rotation sur la poutre. Le bâti peut ainsi occuper deux positions de travail. Le pivotement du bâti autour de l'axe longitudinal de la poutre est assuré par un dispositif de retournement comportant deux vérins et deux leviers mobiles.

Chaque levier mobile est articulé sur le manchon avant (c'est-à-dire sur le bâti) en un point situé à distance de l'axe de rotation du manchon avant.

Les deux vérins, quant à eux, sont implantés entre ces leviers mobiles et la poutre. Plus précisément, chaque vérin est articulé, à l'extrémité de son cylindre, à une console solidaire de la poutre et, à l'extrémité de sa tige, au levier mobile correspondant.

Il s'agit donc d'une charrue différente de celle à laquelle se rapporte la présente invention étant donné que :
- les deux vérins ne tournent pas avec le bâti lors du retournement,
- les deux leviers mobiles sont articulés chacun en un point situé à distance de l'axe du pivot avant autour duquel tourne le bâti lors du retournement.

Les documents FR 1 516 400 et US 3,583,493 décrivent des charrues réversibles dont le retournement est réalisé par un seul vérin et qui présentent des moyens de verrouillage verrouillant le bâti portant les corps de labour dans chacune de ses deux positions de travail. La mise en place et la neutralisation de ces moyens de verrouillage se font automatiquement après la fin et avant le début du retournement.

Dans le document FR 1 516 400 l'extrémité du vérin unique de retournement comporte une broche qui est guidée dans une lumière en H d'un guide solidaire du bâti portant les corps de labour.

En fin de retournement, cette broche est mise automatiquement en prise avec un loquet correspondant. La neutralisation du verrouillage se fait également automatiquement avant le début du retournement.

Dans le document US 3,583,493, l'extrémité du vérin unique de retournement est munie d'un pène pouvant quelque peu coulisser dans un guide du bâti, de sorte que dans chaque position de travail son extrémité libre puisse pénétrer dans une lumière d'une plaque correspondante de l'avant-train.

Le pène est ainsi introduit automatiquement dans la lumière correspondante après la fin du retournement du bâti, respectivement retiré de ladite lumière avant le début du retournement suivant.

Dans ces deux charrues connues, le verrouillage (US 3,583,493) et/ou le déverrouillage (FR 1 516 400 et US 3,583, 493) nécessite(nt) de commander le vérin afin qu'il effectue un déplacement plus important que celui nécessaire au simple retournement du bâti portant les corps de labour.

Il convient encore de faire observer que dans ces charrues connues, le verrouillage se fait à la fin de la phase d'allongement du vérin (US 3,583,493), tandis que le déverrouillage se fait au début de la phase de raccourcissement dudit vérin (FR 1 516 400 et US 3,583,493).

Le but de la présente invention est de remédier à l'inconvénient des charrues connues par les documents FR 2 575 358-B1 et FR 2 627 932-A1 et de proposer un dispositif de retournement à la fois simple à mettre en oeuvre par une commande unique et assurant un verrouillage efficace dans les deux positions de travail du bâti.

A cet effet, la charrue réversible semi-portée selon la présente invention est caractérisée en ce que le dispositif de retournement comporte en sus des premiers moyens de verrouillage mécaniques disposés sur l'extrémité de la tige de chaque vérin et des deuxièmes moyens de verrouillage mécaniques disposés sur la poutre, ces moyens de verrouillage mécaniques étant agencés de façon que chaque premier moyen de verrouillage mécanique est mis automatiquement en coopération, respectivement hors coopération, avec le deuxième moyen de verrouillage mécanique correspondant au cours de la phase finale de raccourcissement, respectivement au cours de la phase initiale d'allongement, du vérin correspondant.

Dans chaque position de travail, l'appui du levier mobile correspondant contre la poutre empêche ainsi tout mouvement du bâti et des corps de labour supportés par ce dernier vers le bas, tandis que les moyens de verrouillage qui sont opérationnels, empêchent tout mouvement du bâti et des corps de labour vers le haut. La bonne position des corps de labour qui sont opérationnels, est ainsi maintenue quelles que soient les conditions de travail, ce qui permet d'assurer un labour de bonne qualité dans toutes les situations.

Le dispositif de retournement est du reste simple à mettre en oeuvre étant donné :
- qu'il fait appel à deux vérins, ce qui ne nécessite pas d'inverser la commande hydraulique à mi-course,
- que la mise en coopération et la mise hors coopération des premiers et deuxièmes moyens de verrouillage se font automatiquement, sans intervention spéciale de l'utilisateur.

Dans une réalisation particulièrement avantageuse, il pourra être prévu que lesdits premiers et deuxièmes moyens de verrouillage mécaniques comportent des embouts annulaires et des verrous. Préférentiellement, les verrous seront disposés sur la poutre, tandis que les embouts annulaires seront portés par les tiges des vérins.

Lesdits verrous pourront être réalisés sous forme de doigts disposés sur la poutre de manière symétrique par rapport au plan vertical passant par l'axe du pivot avant. De préférence, chaque doigt s'étendra globalement verticalement à distance de la face correspondante de la poutre en étant fixé à cette dernière à son extrémité supérieure.

Il pourra également être avantageusement prévu que chaque embout annulaire soit disposé sur la tige de vérin correspondante du côté du point d'articulation de la tige de vérin sur le levier mobile respectif opposé audit vérin.

Les vérins, quant à eux, pourront avantageusement être à double effet et aptes à former des moyens complémentaires de verrouillage hydraulique.

A cet effet, lesdits vérins à double effet pourront avantageusement être commandés à partir d'un distributeur hydraulique par un bloc hydraulique de commande et de verrouillage hydraulique du dispositif de retournement.

Ce bloc de commande hydraulique pourra avantageusement comporter :
- deux orifices d'entrée reliés au distributeur par des conduits,
- deux orifices, dits orifices de sortie piston, reliés par des conduits aux chambres côté piston des vérins,
- deux orifices, dits orifices de sortie tige, reliés par des conduits aux chambres côté tige desdits vérins,
- un ensemble de clapets constitué d'un clapet n'autorisant le passage de l'huile qu'en direction des vérins et d'un clapet taré par un ressort n'autorisant le passage de l'huile que vers le distributeur, disposés en parallèle entre chaque orifice d'entrée et chaque orifice de sortie piston,
- des premiers clapets anti-retour pilotés disposés en opposition entre les lignes reliant respectivement chaque orifice de sortie piston à l'ensemble de clapets correspondants,
- des seconds clapets anti-retour pilotés disposés en opposition entre les orifices de sortie tige,
- un conduit reliant un point disposé entre les premiers clapets anti-retour et un point situé entre les seconds clapets anti-retour.

De préférence, il sera prévu que le ressort n'autorise le passage de l'huile que si la pression est de l'ordre de 5 à 10 bars.

La présente invention sera mieux comprise par la description qui va suivre en référence au dessin joint sur lequel :
- la figure 1 est une vue de dessus schématique d'une charrue réversible semi-portée à cinq corps de labour,
- la figure 2 représente le dispositif de retournement de la charrue pour une première position de travail du bâti ainsi que le circuit hydraulique de commande dudit dispositif de retournement,
- la figure 3 est une vue semblable à la figure 2 pour une position du bâti précédant la fin du premier quart de tour,
- la figure 4 est une vue semblable à la figure 2 pour une position du bâti suivant la fin du premier quart de tour,
- la figure 5 représente le dispositif de retournement pour la seconde position de travail du bâti.

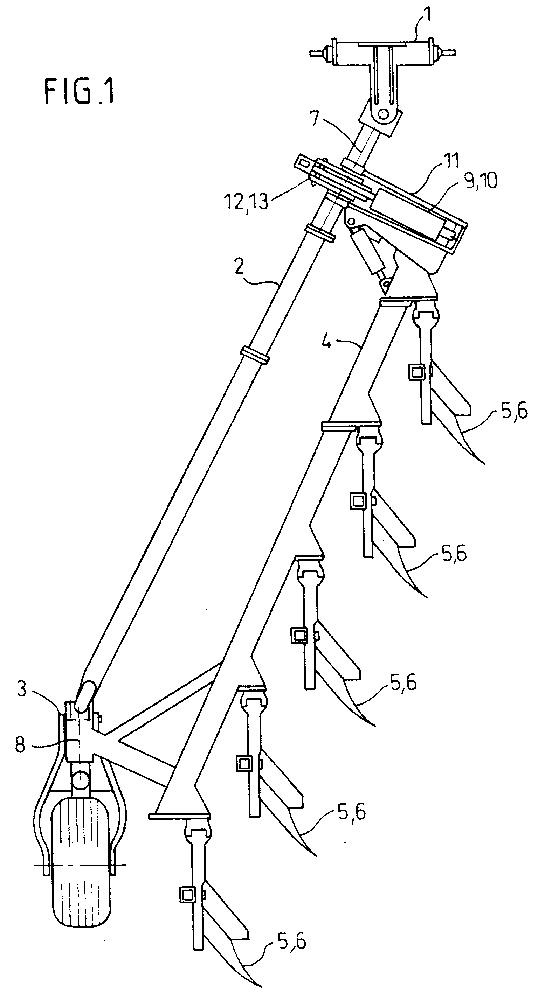

La charrue réversible semi-portée représentée schématiquement à la figure 1 comporte, de manière connue en soi, un avant-train (1) destiné à être attelé à l'attelage trois points d'un tracteur non représenté, une poutre (2) disposée entre ledit avant-train (1) et la roue de semi-portage (3), et un bâti (4) portant des corps de labour (5, 6). Ledit bâti (4) est monté à rotation autour d'un pivot avant (7) de la poutre (2) et d'un pivot arrière (8).

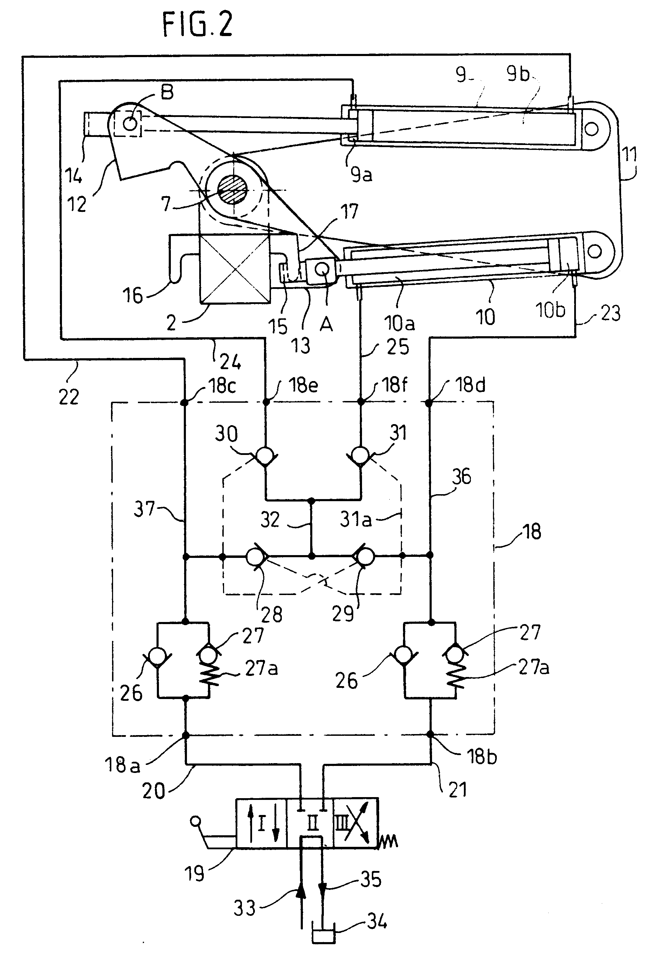

Le retournement du bâti (4) est assuré par la mise en oeuvre d'un dispositif de retournement, mieux visible à la figure 2, comportant, de manière connue en soi, deux vérins (9, 10) reliés d'une part à une console (11) solidaire du bâti (4) et d'autre part à deux leviers (12, 13) guidés en rotation autour de l'axe du pivot avant (7).

Dans la position représentée à la figure 2, la tige du vérin (9) est sortie tandis que celle du vérin (10) est rentrée, la position de travail correspondante du bâti (4), solidaire de la console (11), étant définie par l'appui du levier (13), sur lequel est articulé ledit vérin (10), contre la poutre (2).

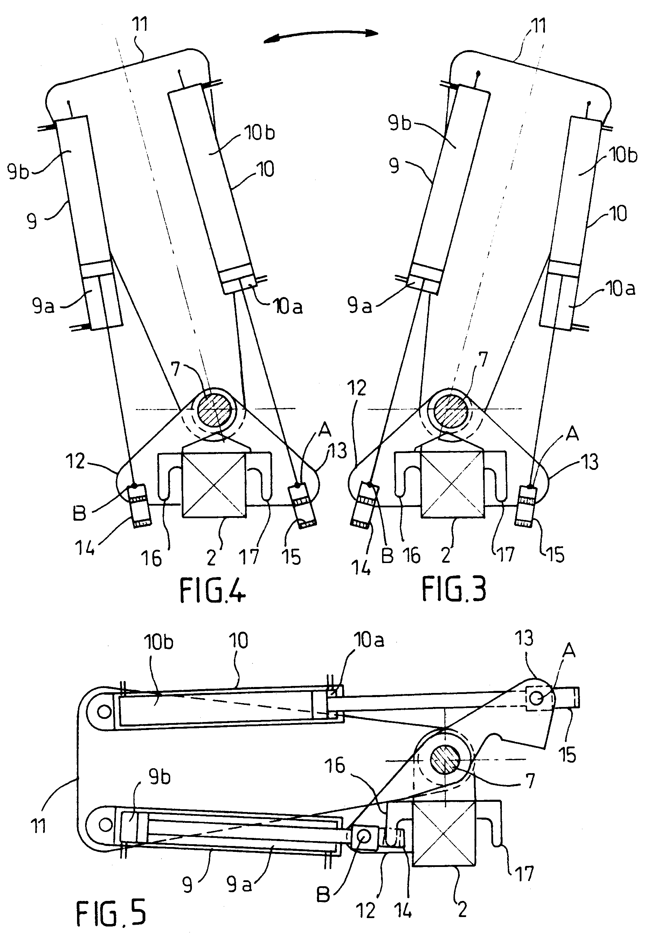

Le retournement du bâti (4) et des corps de labour (5, 6) qu'il porte, est assuré en commandant le vérin (10) en allongement ce qui entraîne le dispositif en rotation (sur la figure 2 : dans le sens inverse des aiguilles d'une montre) vers les positions respectivement représentées aux figures 3 et 4. Le vérin (10) s'allonge jusqu'à la position de la figure 4 suivant le quart de tour du bâti (4) pour laquelle le levier (12) est en butée contre la poutre (2). La poursuite du mouvement de retournement s'effectue alors sous l'action du poids du bâti (4) et des corps de labour (5, 6) tandis que le vérin (9) est raccourci.

Suivant l'invention, le dispositif de retournement comporte des moyens de verrouillage mécaniques (14, 15, 16, 17) de chaque position de travail du bâti (4) disposés entre la poutre (2) et les extrémités des tiges des vérins (9, 10).

Ces moyens de verrouillage mécaniques (14, 15, 16, 17) sont composés d'embouts annulaires (14, 15) adaptés à coopérer avec des verrous (16, 17). Dans la mise en oeuvre de l'invention représentée aux figures, les verrous (16, 17) sont disposés sur la poutre (2) de manière symétrique par rapport au plan vertical passant par l'axe du pivot avant (7). En outre, ces verrous (16, 17) sont formés par des doigts s'étendant globalement verticalement à distance des faces correspondantes de la poutre (2). Lesdits doigts (16, 17) sont fixés à la poutre (2) à leur extrémité supérieure respective et sont ainsi dirigés vers le sol.

Chaque tige de vérin porte, à son extrémité opposée au piston, un embout annulaire (14, 15). Comme visible sur le dessin, cet embout annulaire (14, 15) est disposé du côté du point d'articulation (B, A) de la tige de vérin sur le levier (12, 13) opposé audit vérin (9, 10).

Les embouts annulaires (14 et 15) respectivement portés par les tiges des vérins (9 et 10), sont adaptés à venir se positionner de manière automatique, au cours du mouvement de retournement, autour des verrous (16 et 17) portés par la poutre (2), à la fin de la course de retournement du bâti (4).

Les dispositions selon l'invention sont particulièrement intéressantes du fait que le verrouillage du bâti (4) en fin de retournement s'effectue de manière totalement automatique en raison des conformations et emplacements prévus pour les moyens de verrouillage mécaniques (14, 15, 16, 17), sans que l'utilisateur de la charrue ait à surveiller le mouvement pour effectuer une commande spéciale de verrouillage au moment opportun.

Dans la position de travail de la figure 2, l'appui du levier (13) contre la poutre (2) empêche tout mouvement du bâti (4) dans le sens des aiguilles d'une montre, tandis que l'embout annulaire (15), par sa disposition autour du verrou (17), empêche tout mouvement du bâti (4) dans le sens opposé. Tout mouvement du bâti (4) tendant à l'éloigner de la verticalité est ainsi empêché, ce qui permet d'assurer un travail de bonne qualité.

Lors du retournement, le mouvement du dispositif est dans un premier temps, jusqu'à la position de la figure 3, une rotation autour du point (A) d'articulation de la tige du vérin (10) sur le levier (13), ce qui éloigne l'embout annulaire (15) du verrou (17) et fait ainsi cesser leur action.

Le mouvement de retournement se poursuit alors, comme à l'habitude, jusqu'à ce que le levier (12) soit en butée contre la poutre (2). Au cours de la fin du mouvement consistant en une rotation autour du point (B) d'articulation de la tige du vérin (9) sur le levier (12), l'embout annulaire (14) est amené autour du verrou (16) pour verrouiller le bâti (4) dans sa seconde position de travail.

D'autres dispositions de verrouillage mécanique pourraient également être utilisées, à titre d'exemple, l'on pourrait disposer les embouts annulaires (14, 15) sur la poutre (2) tandis que les tiges de vérins porteraient les verrous (16, 17).

Le dispositif de retournement selon l'invention est encore remarquable en ce qu'il propose des moyens de verrouillage hydrauliques par la mise en oeuvre de vérins (9 et 10) à double effet. De tels vérins permettent d'assurer un meilleur maintien du bâti (4) en position de travail du fait que le piston de chaque vérin (9, 10) est, au cours du travail de la charrue, disposé entre deux chambres remplies d'huile et non en appui d'un côté sur de l'huile et de l'autre sur de l'air.

L'utilisation de tels vérins à double effet nécessite de concevoir un circuit hydraulique de commande complexe et tout à fait différent des circuits usuels. Ce circuit de commande est représenté à la figure 2 et fait partie de la présente invention.

Sur cette figure, l'on a représenté en (19) un distributeur hydraulique du tracteur. Ce distributeur (19) est alimenté en fluide par le conduit (33) et est en relation avec le réservoir (34) par le conduit (35).

Le bloc hydraulique (18) de commande et de verrouillage hydraulique du dispositif de retournement est intercalé entre ce distributeur (19) et les vérins (9 et 10).

Ce bloc hydraulique (18) comporte d'un côté deux orifices d'entrée (18a et 18b) reliés au distributeur (19) par les conduits (20 et 21), et, de l'autre côté, deux orifices (18c, 18d), dits orifices de sortie piston, reliés par les conduits (22, 23) aux chambres (9b, 10b) côté piston des vérins (9, 10), et deux orifices (18e, 18f), dits orifices de sortie tige, reliés par des conduits (24, 25) aux chambres (9a, 10a) côté tige desdits vérins (9, 10).

Entre les orifices (18a et 18c) d'une part et (18b et 18d) d'autre part, sont disposés, en parallèle, un clapet (26) n'autorisant le passage de l'huile qu'en direction des vérins (9, 10) et un clapet (27) taré par un ressort (27a) et n'autorisant le passage de l'huile que vers le distributeur (19).

Le ressort (27a) est prévu afin de n'autoriser le passage de l'huile que si la pression de celle-ci est de l'ordre de 5 à 10 bars.

Des premiers clapets anti-retour pilotés (28 et 29) sont disposés en opposition entre les lignes (36, 37) reliant respectivement chaque orifice (18c, 18d) à l'ensemble de clapets (26, 27) correspondant.

De même, des seconds clapets anti-retour pilotés (30, 31) sont disposés en opposition entre les orifices (18e et 18f).

Les clapets anti-retour (28 et 31) sont pilotés par la pression régnant dans la ligne (36) reliant l'orifice (18d) à l'ensemble de clapets (26, 27) disposé devant l'orifice (18b), tandis que les clapets (29 et 30) sont pilotés par la pression régnant dans la ligne (37) reliant l'orifice (18c) à l'ensemble de clapets (26, 27) disposé devant l'orifice (18a).

Un conduit (32) relie un point disposé entre les clapets (28 et 29) à un point situé entre les clapets (30 et 31).

La charrue étant dans la position représentée à la figure 2, le conducteur du tracteur met le distributeur (19) dans la position (III) lorsqu'il veut retourner la bâti (4) en bout de champ.

L'huile en provenance du circuit hydraulique du tracteur par le conduit (33) entre dans le bloc hydraulique (18) par l'orifice (18b), soulève le clapet (26), circule vers l'orifice (18d) d'où elle atteint, par le conduit (23), la chambre (10b) côté piston du vérin (10).

Le vérin (10) s'allonge et entraîne alors la console (11) en rotation autour du pivot avant (7) tandis que le levier (13) est en appui contre la poutre (2).

La pression de commande présente dans la ligne (36) soulève les clapets (28 et 31). Ainsi, l'huile initialement contenue dans la chambre (10a) côté tige du vérin (10) peut s'écouler par le conduit (25), le clapet (31), le conduit (32), le clapet (28), la ligne (37), le clapet (27), le conduit (20), le distributeur (19) puis le conduit (35) vers le réservoir (34). Le clapet taré (27) s'ouvre sous l'effet de la pression d'alimentation qui est usuellement de 80 à 150 bars et peut repousser le ressort (27a).

Du fait des tarages des clapets (27) à une pression de 5 à 10 bars, l'huile contenue dans les chambres (9a et 9b) du vérin (9) reste emprisonnée dans ces chambres, ce qui assure le maintien en élongation du vérin (9).

La console (11) tourne alors jusqu'à la position de la figure 3 pour laquelle le levier (12) arrive en butée contre la poutre (2).

Lorsque l'on continue à approvisionner la chambre (10b) du vérin (10), le mouvement de rotation se poursuit, entraînant un raccourcissement du vérin (9) et un vidage de la chambre (9b) dudit vérin (9).

Le volume de la chambre (9b) diminue plus vite que n'augmente le volume de la chambre (9a) ; le volume d'huile de la chambre (9a) est alors complété par de l'huile en provenance de la chambre (10a) du vérin (10), qui passe par le clapet (31) ouvert et soulève le clapet (30). Par le tarage du clapet (27) à 5 à 10 bars, l'on oblige le transfert complet de l'huile sortant de la chambre (10a) vers la chambre (9a).

A partir de la position de la figure 4, la fin du mouvement de retournement est effectuée par l'action du poids du bâti (4) et des corps de labour (5, 6).

L'huile contenue dans la chambre (9b) s'échappe vers le réservoir (34) par les conduits (20 et 35). Le vérin (10) reste, quant à lui, en élongation du fait que sa chambre (10b) reste alimentée à partir du distributeur (19).

Lorsque le retournement est terminé, le conducteur ramène le distributeur à la position (II), ce qui emprisonne l'huile dans les circuits et referme les clapets (30 et 31).

Le bâti (4) sera alors empêché de quitter sa position verticale d'une part par la mise en oeuvre des moyens de verrouillage formés par un embout annulaire (14, 15) et un doigt (16, 17) porté par la poutre (2) et, d'autre part par l'impossibilité d'établir une circulation d'huile dans le circuit.

Pour assurer le retournement du bâti (4) vers la position de la figure 2, le distributeur (19) est amené à la position (I) ce qui permet d'alimenter le bloc hydraulique (18) par le conduit (20).

## Revendications

1. Charrue réversible semi-portée comportant :
- une poutre (2),
- un bâti (4) portant des corps de labour (5, 6) et monté pivotant autour d'au moins un pivot avant (7) de ladite poutre (2) de sorte à pouvoir occuper deux positions de travail, une console (11) étant solidaire dudit bâti (4)
et
- un dispositif de retournement comportant deux leviers mobiles (12, 13) guidés en rotation sur ladite poutre (2) autour de l'axe dudit pivot avant (7) et deux vérins (9, 10) articulés chacun d'une part sur la console (11) et d'autre part à l'un correspondant des deux leviers mobiles (12, 13), de telle sorte que dans chaque position de travail, le levier mobile (12, 13) lié au vérin (9, 10) se trouvant en position raccourcie soit en butée contre la poutre (2)
caractérisée en ce que le dispositif de retournement comporte en sus des premiers moyens de verrouillage mécaniques (14, 15) disposés sur l'extrémité de la tige de chaque vérin (9, 10) et des deuxièmes moyens de verrouillage mécaniques (16, 17) disposés sur la poutre (2), ces moyens de verrouillage mécaniques étant agencés de façon que chaque premier moyen de verrouillage mécanique (14, 15) est mis automatiquement en coopération, respectivement hors coopération, avec le deuxième moyen de verrouillage mécanique (16, 17) correspondant au cours de la phase finale de raccourcissement, respectivement au cours de la phase initiale d'allongement, du vérin (9, 10) correspondant.

2. Charrue selon la revendication 1, caractérisée en ce que lesdits premiers et deuxièmes moyens de verrouillage mécaniques comportent des embouts annulaires (14, 15) et des verrous (16, 17).

3. Charrue selon la revendication 2, caractérisée en ce que les verrous (16, 17) sont disposés sur la poutre (2), tandis que les embouts annulaires (14, 15) sont portés par les tiges des vérins (9, 10).

4. Charrue selon la revendication 3, caractérisée en ce que lesdits verrous (16, 17) sont des doigts disposés sur la poutre (2) de manière symétrique par rapport au plan vertical passant par l'axe du pivot avant (7).

5. Charrue selon la revendication 4, caractérisée en ce que chaque doigt (16, 17) s'étend globalement verticalement à distance de la face correspondante de la poutre (2) en étant fixé à la poutre (2) à son extrémité supérieure.

6. Charrue selon l'une quelconque des revendications 3 à 5, caractérisée en ce que chaque embout annulaire (14, 15) est disposé sur la tige de vérin correspondante du côté du point d'articulation (B, A) de la tige de vérin (9, 10) sur le levier mobile (12, 13) respectif opposé audit vérin (9, 10).

7. Charrue selon l'une quelconque des revendications précédentes, caractérisée en ce que les vérins (9, 10) sont à double effet et aptes à former des moyens complémentaires de verrouillage hydraulique.

8. Charrue selon la revendication 7, caractérisée en ce que lesdits vérins à double effet (9, 10) sont commandés à partir d'un distributeur hydraulique (19) par un bloc hydraulique (18) de commande et de verrouillage hydraulique du dispositif de retournement.

9. Charrue selon la revendication 8, caractérisée en ce que le bloc hydraulique (18) comporte :
- deux orifices d'entrée (18a, 18b) reliés au distributeur (19) par des conduits (20, 21),
- deux orifices (18c, 18d), dits orifices de sortie piston, reliés par des conduits (22, 23) aux chambres (9b, 10b) côté piston des vérins (9, 10),
- deux orifices (18e, 18f), dits orifices de sortie tige, reliés par des conduits (24, 25) aux chambres (9a, 10a) côté tige desdits vérins (9, 10),
- un ensemble de clapets constitué d'un clapet (26) n'autorisant le passage de l'huile qu'en direction des vérins (9, 10) et d'un clapet (27) taré par un ressort (27a) n'autorisant le passage de l'huile que vers le distributeur (19), disposés en parallèle entre chaque orifice d'entrée (18a, 18b) et chaque orifice de sortie piston (18e, 18d),
- des premiers clapets anti-retour pilotés (28, 29) disposés en opposition entre les lignes (36, 37) reliant respectivement chaque orifice de sortie piston (18c, 18d) à l'ensemble de clapets (26, 27) correspondant,
- des seconds clapets anti-retour pilotés (30, 31) disposés en opposition entre les orifices de sortie tige (18e, 18f),
- un conduit (32) reliant un point disposé entre les premiers clapets antiretour (28, 29) et un point situé entre les seconds clapets anti-retour (30, 31).

10. Charrue selon la revendication 9, caractérisée en ce que le ressort (27a) n'autorise le passage de l'huile que si la pression est de l'ordre de 5 à 10 bars.

## Claims

1. A reversible semi-supported plough comprising:
- a beam (2),
- a frame (4) carrying tilling bodies (5,6) and mounted so as to be pivotable about at least one front pivot (7) of said beam (2) so as to be able to occupy two working positions, a bracket (11) being integral with said frame (4) and
- a returning device comprising two movable levers (12, 13) guided in rotation on said beam (2) about the axis of said front pivot (7) and two jacks (9, 10) each articulated on the one hand on the bracket (11) and on the other hand to a corresponding one of the two movable levers (12, 13) such that in each working position, the movable lever (12, 13) connected to the jack (9, 10), being in shortened position, is in abutment against the beam (2)
characterised in that the returning device comprises in addition first mechanical locking means (14, 15) arranged on the end of the shank of each jack (9, 10) and second mechanical locking means (16, 17) arranged on the beam (2), these mechanical locking means being arranged such that each first mechanical locking means (14, 15) is put automatically into cooperation and respectively out of cooperation with the corresponding second mechanical locking means (16, 17) during the final shortening phase, respectively during the initial lengthening phase, of the corresponding jack (9, 10).

2. A plough according to Claim 1, characterised in that said first and second mechanical locking means comprise annular ends (14, 15) and bolts (16, 17).

3. A plough according to Claim 2, characterised in that the bolts (16, 17) are arranged on the beam (2), whilst the annular ends (14, 15) are carried by the shanks of the jacks (9, 10).

4. A plough according to Claim 3, characterised in that said bolts (16, 17) are fingers arranged on the beam (2) in a symmetrical manner with respect to the vertical plane passing through the axis of the front pivot (7).

5. A plough according to Claim 4, characterised in that each finger (16, 17) extends overall vertically at a distance from the corresponding face of the beam (2), being fixed to the beam (2) at its upper end.

6. A plough according to any one of Claims 3 to 5, characterised in that each annular end (14, 15) is arranged on the corresponding jack shank towards the articulation point (B, A) of the shank of the jack (9, 10) on the respective movable lever (12, 13) opposite the said jack (9, 10).

7. A plough according to any one of the preceding claims, characterised in that the jacks (9, 10) are double-acting and are suited to forming complementary hydraulic locking means.

8. A plough according to Claim 7, characterised in that said double-acting jacks (9, 10) are controlled from a hydraulic distributor (19) by a hydraulic unit (18) for control and hydraulic locking of the returning device.

9. A plough according to Claim 8, characterised in that the hydraulic unit (18) comprises:
- two inlet orifices (18a, 18b) connected to the distributor (19) by ducts (20, 21),
- two orifices (18c, 18d), said piston outlet orifices, connected by ducts (22, 23) to the chambers (9b, 10b) on the piston side of the jacks (9, 10),
- two orifices (18e, 18f), said shank outlet orifices, connected by ducts (24, 25) to the chambers (9a, 10a) on the shank side of said jacks (9, 10),
- a set of valves made up of a valve (26) only permitting the passage of oil in the direction of the jacks (9, 10) and a valve (27) calibrated by a spring (27a) only permitting the passage of oil towards the distributor (19), arranged in parallel between each inlet orifice (18a, 18b) and each piston outlet orifice (18e, 18d),
- first piloted non-return valves (28, 29) arranged in opposition between the lines (36, 37) connecting respectively each piston outlet orifice (18c, 18d) to the corresponding set of valves (26, 27),
- second piloted non-return valves (30,31) arranged in opposition between the shank outlet orifices (18e, 18f),
- a duct (32) connecting a point arranged between the first non-return valves (28, 29) and a point situated between the second non-return valves (30, 31).

10. A plough according to Claim 9, characterised in that the spring (27a) only permits the passage of oil if the pressure is in the order to 5 to 10 bars.

## Patentansprüche

1. Aufsatteldrehpflug mit
- einem Träger (2),
- einem Gestell (4), welches Pflugscharen (5, 6) trägt und um mindestens einen vorderen Drehpunkt (7) des Trägers (2) drehbar derart befestigt ist, daß es zwei Arbeitspositionen einnehmen kann, wobei eine Konsole (11) fest mit diesem Gestell (4) verbunden ist, und
- einer Drehvorrichtung, die zwei bewegliche Hebel (12, 13) aufweist, die rotierend auf dem Träger (2) um die Achse des vorderen Drehpunktes (7) geführt werden, sowie zwei Zylindern (9, 10), deren jeder jeweils einerseits an der Konsole (11) und andererseits an dem jeweils entsprechenden der beiden beweglichen Hebel (12, 13) angelenkt ist, derart, daß sich der mit dem Zylinder (9, 10) in eingefahrener Position verbundene bewegliche Hebel (12, 13) in jeder Arbeitsposition im Anschlag gegen den Träger (2) befindet,
**dadurch gekennzeichnet**, daß die Drehvorrichtung darüber hinaus erste mechanische Verriegelungsmittel (14, 15) aufweist, die am Ende der Stange jedes Zylinders (9, 10) angebracht sind, sowie zweite mechanische Verriegelungsmittel (16, 17), die am Träger (2) vorgesehen sind, wobei diese mechanischen Verriegelungsmittel derart angeordnet sind, daß während der Endphase des Einfahrens bzw. während der Anfangsphase des Ausfahrens des entsprechenden Zylinders (9, 10) automatisch ein Zusammenwirken bzw. eine Aufhebung des Zusammenwirkens jedes ersten mechanischen Verriegelungsmittels (14, 15) mit dem entsprechenden zweiten mechanischen Verriegelungsmittel (16, 17) bewirkt wird.

2. Pflug nach Anspruch 1, dadurch gekennzeichnet, daß die ersten und zweiten mechanischen Verriegelungsmittel ringförmige Ansätze (14, 15) und Riegel (16, 17) aufweisen.

3. Pflug nach Anspruch 2, dadurch gekennzeichnet, daß die Riegel (16, 17) auf dem Träger (2) angebracht sind, während die ringförmigen Ansätze (14, 15) von den Stangen der Zylinder (9, 10) getragen werden.

4. Pflug nach Anspruch 3, dadurch gekennzeichnet, daß die Riegel (16, 17) Finger sind, die am Träger (2) symmetrisch bezüglich der vertikalen Ebene angebracht sind, welche durch die Achse des vorderen Drehpunktes (7) verläuft.

5. Pflug nach Anspruch 4, dadurch gekennzeichnet, daß jeder Finger (16, 17) im wesentlichen vertikal mit Abstand zur entsprechenden Oberfläche des Trägers (2) verläuft, indem er an seinem oberen Ende am Träger (2) befestigt ist.

6. Pflug nach einem der Ansprüche 3 bis 5, dadurch gekennzeichnet, daß jeder ringförmige Ansatz (14, 15) an der entsprechenden Zylinderstange auf der Seite des Gelenkpunktes (B, A) der Stange des Zylinders (9, 10) an dem jeweiligen beweglichen Hebel (12, 13) gegenüber diesem Zylinder (9, 10) angebracht ist.

7. Pflug nach einem der vorhergehenden Ansprüche, dadurch gekennzeichnet, daß die Zylinder (9 10) doppeltwirkend und geeignet sind, komplementäre hydraulische Verriegelungsmittel zu bilden.

8. Pflug nach Anspruch 7, dadurch gekennzeichnet, daß diese doppeltwirkenden Zylinder (9, 10) von einem hydraulischen Wegeventil (19) aus über einen hydraulischen Block (18) zur Steuerung und zur hydraulischen Verriegelung der Drehvorrichtung gesteuert werden.

9. Pflug nach Anspruch 8, dadurch gekennzeichnet, daß der hydraulische Block (18) folgendes aufweist:
- zwei Eingangsöffnungen (18a, 18b), die mit dem Wegeventil (19) über Leitungen (20, 21) verbunden sind,
- zwei Öffnungen (18c, 18d), sogenannte Kolbenenausgangsöffnungen, die über Leitungen (22, 23) mit den Kammern (9b, 10b) auf der Kolbenseite der Zylinder (9, 10) verbunden sind,
- zwei Öffnungen (18e, 18f), sogenannte Stangenausgangsöffnungen, die über Leitungen (24, 25) mit den Kammern (9a, 10a) auf der Stangenseite der Zylinder (9, 10) verbunden sind,
- einen Satz Ventile, bestehend aus einem Ventil (26), das den Durchgang des Öls nur in Richtung der Zylinder (9, 10) erlaubt, und einem von einer Feder (27a) tarierten Ventil (27), das den Durchgang des Öls nur zum Wegeventil (19) zuläßt, wobei die Ventile parallel zwischen jeder Eingangsöffnung (18a, 18b) und jeder Kolbenausgangsöffnung (18e, 18d) angebracht sind,
- erste gesteuerte Rückschlagventile (28, 29), die einander gegenüberliegend zwischen den Leitungen (36, 37) angebracht sind, welche jeweils jede Kolbenausgangsöffnung (18c, 18d) mit dem entsprechenden Satz an Ventilen (26, 27) verbinden,
- zweite gesteuerte Rückschlagventile (30, 31), die einander gegenüberliegend zwischen den Stangenausgangsöffnungen (18e, 18f) angebracht sind,
- eine Leitung (32), die einen zwischen den ersten Rückschlagventilen (28, 29) liegenden Punkt mit einem Punkt zwischen den zweiten Rückschlagventilen (30, 31) verbindet.

10. Pflug nach Anspruch 9, dadurch gekennzeichnet, daß die Feder (27a) den Durchgang des Öls nur bei einem Druck in der Größenordnung von zwischen 5 und 10 bar zuläßt.
